# EUROPÄISCHE PATENTSCHRIFT

(11) **EP 1 717 092 B1**
(45) Veröffentlichungstag und Bekanntmachung des Hinweises auf die Patenterteilung: **21.01.2009**
(21) Anmeldenummer: 06016430.8
(22) Anmeldetag: 28.11.2000
(51) Int. Cl.: B60K 37/06

(54) **Bediengerät mit beleuchtbaren Bedienelementen**
Control apparatus with illuminated control elements
Appareil de commande à éléments de commande lumineux

(30) Priorität: 06.12.1999 DE 19958725
(43) Veröffentlichungstag der Anmeldung: 02.11.2006
(62) Teilanmeldung aus: 00125971.2
(73) Patentinhaber: Continental Automotive GmbH, 30165 Hannover (DE)
(72) Erfinder: Lange, Michael, 65205 Wiesbaden (DE)

(56) Entgegenhaltungen:
- EP-A- 0 505 690
- DE-A- 1 815 910
- DE-A- 19 722 369
- US-A- 4 800 466
- US-A- 4 930 048

## Beschreibung

Die Erfindung betrifft ein Bediengerät eines Kraftfahrzeuges mit mehreren in einer sichtbaren Oberfläche des Bediengeräts angeordneten Bedienelementen, von denen zumindest eines von einer Lichtquelle über eine Lichtauskoppelfläche eines ringförmigen Lichtleiters beleuchtbar ist.

Bediengeräte eines Kraftfahrzeuges, wie bspw. solche für eine Klimaanlage oder ein Navigationssystem, weisen mehrere Bedienelemte auf. Um auch bei Nacht eine sichere Bedienung der Bediengeräte zu gewährleisten, müssen die Bedienelemente auch in der Dunkelheit sicher erkennbar sein. Eine optische Kennzeichnung der Bedienelemente kann bspw. dadurch erfolgen, dass das Bedienelemente selbst eine Leuchtmarkierung enthält oder auch ein Leuchtring um das Bedienelement herum angeordnet ist. Da der Platz hinter dem Bedienelement im Bediengerät in der Regel durch die durch das Bedienelement betätigte Komponente belegt ist, wie bspw. ein Potentiometer, werden häufig Lichtleiter eingesetzt, die das Licht einer Lichtquelle an die gewünschte Stelle im Bediengerät führen. Gleichzeitig ist zudem eine gleichmäßige Ausleuchtung sicherzustellen.

Als Lichtquellen werden in der Regel mehrere Leuchtdioden eingesetzt, die auf einer Leiterplatte im Bediengerät angeordnet sind und deren Lichtabstrahlung senkrecht zur Leiterplattenebene erfolgt. Die Abstrahlung der Leuchtdioden erfolgt dabei zwar grundsätzlich in Richtung der sichtbaren Bedienoberfläche des Bediengerätes, jedoch können die Leuchtdioden aus den vorgenannten Gründen nicht direkt hinter dem zu beleuchtendem Element angeordnet werden. Zudem würde eine solche direkte Anordnung der Leuchtdioden bspw. bei der Beleuchtung eines Bedienelementes über Leuchtringe auch zu einer ungleichmäßigen Lichtverteilung führen. Auch aus diesem Grund wird das von den Leuchtdioden ausgesandte Licht in einen Lichtleiter eingekoppelt und über diesen an die gewünschte Stelle geführt. Um hierbei den Lichtverlust gering zu halten, müssen ausreichend große Radien des Lichtleiters zur Lichtumlenkung eingehalten werden. Dadurch ergeben sich entsprechend große Einbautiefen des Bediengerätes.

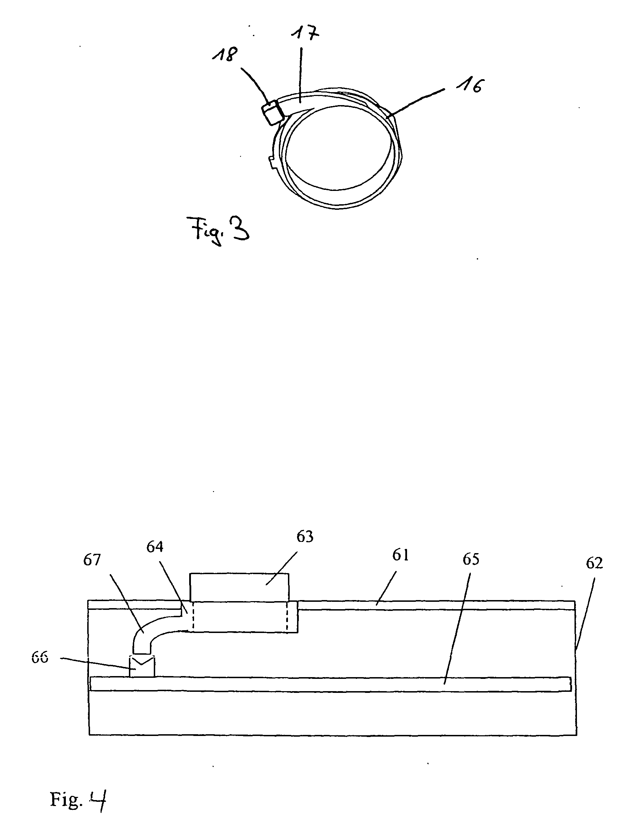

In Figur 4 ist eine solche bekannte Anordnung nach dem Stand der Technik dargestellt. In einer sichtbaren Front 61 eines Gehäuses 62 ist ein Bedienelement 63 angeordnet. Das Bedienelement 63 ist von einem Leuchtring umgeben, der durch das Lichtleitelement 64 gebildet wird. In dem Gehäuse 62 ist weiterhin eine Leiterplatte 65 angeordnet, auf die eine Leuchtdiode 66 aufgebracht ist. Die Leuchtdiode 66 strahlt Licht in Richtung der Front 61 ab. Sie ist jedoch aufgrund der Einbauverhältnisse seitlich versetzt zu dem Bedienelement 63 auf der Leiterplatte 65 angeordnet. Die Lichteinkopplung in das Lichtleitelement 64 erfolgt über ein Bogensegment 67. Dieser Aufbau hat eine relativ große Bautiefe des Bediengeräts zur Folge.

Eine ähnliche Anordnung mit einer seitlich angeformten Lichtleitzunge ist aus der EP 0 505 690 bekannt.

Aus der EP 0 498 451 A1 ist ein beleuchtbares Anzeigeinstrument eines Kraftfahrzeuges bekannt. Zur Beleuchtung des Anzeigeinstrumentes ist dort ein nicht vollständig geschlossener Kreisring vorgesehen, in dessen fehlendem Teil die Lichtquelle angeordnet ist. Aufgrund der unterschiedlichen Einbaubedingungen bei einem relativ großen Anzeigeinstrument im Vergleich zu einem relativ kleinen Bedienelement, kann diese Lösung nicht ohne weiteres auf Bedienelemente übertragen werden. Dies gilt insbesondere deshalb, weil der Einbauraum unmittelbar hinter dem Bedienelement nicht immer zur Anbringung der Lichtquelle zur Verfügung steht.

Aus der US-A 4800466 ist ein Bediengerät eines Kraftfahrzeugs nach dem Oberbegriff des Anspruchs 1 mit mehreren in einer sichtbaren Oberfläche des Bediengeräts angeordneten Bedienelementen bekannt. Eine dem Bedienelement zugeordnete Beleuchtung erfolgt mittels eines einstückig ausgebildeten Elements mit mehreren Lichtleitern, wobei Lichtaustrittsflächen auf einem Kreisumfang angeordnet sind, so dass eine gewünschte, nicht homogene Lichtverteilung auf dem Kreisumfang entsteht.

Aus der DE 18 15 910 A ist eine Beleuchtungseinrichtung, beispielsweise für einen Tachometer, bekannt, die ein kreisringförmiges, als Lichtleiter dienendes Element aufweist, das mit zwei diametral entgegensetzt angeordneten Ausschnitten versehen ist. Im Eingriff mit dem jeweiligen Ausschnitt ist ein optisches Kabel vorgesehen.

Aufgabe der Erfindung ist es daher, ein Bediengerät eines Kraftfahrzeuges mit beleuchtbaren Bedienelementen anzugeben, das eine geringe Einbautiefe aufweist und gleichzeitig eine homogene Lichtverteilung gewährleistet, wobei insbesondere so genannte "hot spots", d. h. Punkte hoher Leuchtdichte, vermieden werden.

Die Aufgabe wird bei einem gattungsgemäßen Bediengerät durch die kennzeichnenden Merkmale des Anspruchs 1 gelöst, wobei unter "kreisringförmig" auch ovale Formen verstanden werden.

Die Erfindung beinhaltet eine Lösung zur Beleuchtung eines einzelnen, insbesondere eines runden, Bedienelements. Das Bedienelement ist über einen ringförmigen Lichtleiter, der das Bedienelement in der Bedienoberfläche im Wesentlichen umschließt, beleuchtbar. Erfindungsgemäß weist der Lichtleiter eine geschlossene kreisringförmige Form auf, wobei der Lichtleiter eine tangentiale, radial nach außen gerichtete Ausbuchtung aufweist, die eine Lichteinkoppelfläche senkrecht zur ringförmigen Lichtauskoppelfläche bildet. Durch diese Ausgestaltung wird eine gegenüber den bekannten Ausführungsformen verringerte Bautiefe erzielt. Gegenüber der von der Instrumentenbeleuchtung her bekannten Lösungsform weist die Erfindung den Vorteil auf, dass die Lichtquelle seitlich zu dem Bedienelement, bzw. dem Anzeigeinstrument in der bekannten Ausführungsform, versetzt angeordnet werden kann. Somit kann der Einbauraum hinter dem Bedienelement voll für das eigentlich zu bedienende Element, bspw, ein Potentiometer, genutzt werden. Die Lichtauskoppelfläche des ringförmigen Lichtleiters ist insbesondere im wesentlichen formschlüssig in der sichtbaren Oberfläche des Bediengerätes angeordnet und umschließt das Bedienelement. Hierdurch wird eine weitgehend ebene Front des Bediengerätes erzielt, aus der lediglich das Bedienelement selbst hervorragt.

Um eine gezielte Lichteinkopplung in den Lichtleiter zu erreichen, ohne dass in unnötigem Maße Streulicht auftritt, ist insbesondere vorgesehen eine Lichtquelle mit einer einzigen, gerichteten Lichtauskoppelfläche zu verwenden. Hierbei kann es sich insbesondere um eine Leuchtdiode handeln. Um auch weiterhin eine Leiterplatte, auf der die Leuchtdiode angeordnet ist, im wesentlichen parallel zur Gehäusefront des Bediengerätes anordnen zu können, ist weiterhin vorgesehen, das die einzige Lichtaustrittsfläche der Lichtquelle senkrecht zu einer Fläche der Lichtquelle mit elektrischen Kontaktelementen angeordnet ist, die die Verbindung zur Leiterplatte herstellen.

Die Erfindung wird nachfolgend anhand von Ausführungsbeispielen und der Zeichnung näher erläutert. Es zeigen:
- Figur 1: eine Frontansicht eines Bediengerätes,
- Figur 2: ein Schnittbild durch ein Bediengerät mit einer kreisringförmigen Ausleuchtung eines Bedienelementes,
- Figur 3: ein erfindungsgemäßes kreisringförmiges Lichtleitelement,
- Figur 4: einen Schnitt durch ein Bediengerät nach dem Stand der Technik.

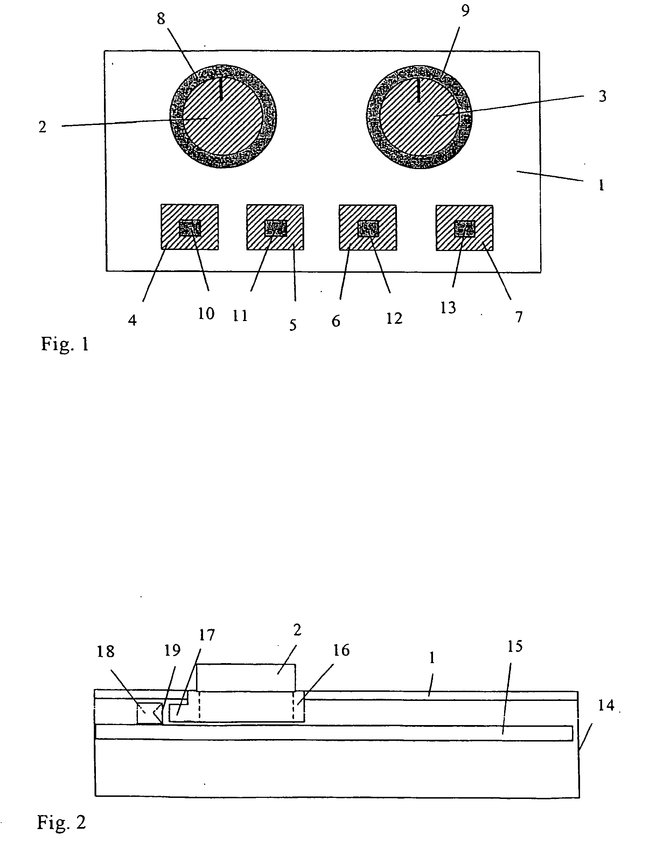

Figur 1 zeigt die im Fahrzeug sichtbare Front 1 eines Bediengerätes. In der Front 1 des Bediengerätes sind drehbare Bedienelemente 2, 3 sowie Tasten 4 - 7 angeordnet. Die drehbaren Bedienelemente 2, 3 sind von Leuchtflächen 8, 9 umgeben, die eine Erkennbarkeit der Bedienelemente 2, 3 auch bei Dunkelheit sicherstellen. Bei den Tasten 4 - 7 sind Leuchtmarkierungen 10 - 13 in der Taste selbst angeordnet.

Figur 2 zeigt einen vereinfachten Schnitt durch ein Bediengerät, das ein drehbares Bedienelement 2 aufweist. Das Bediengerät wird von einem Gehäuse 14 umschlossen, das zum Fahrgastraum hin eine Front 1 aufweist. In dem Gehäuse 14 ist eine Leiterplatte 15 parallel zur Front 1 angeordnet. In die Front 1 ist ein Lichtleiter 16 integriert, der eine kreisringförmige Form aufweist. Der Lichtleiter 16 weist eine tangentiale Ausbuchtung 17 auf, über die die Lichteinkopplung in den Lichtleiter erfolgt. Als Lichtquelle ist eine Leuchtdiode 18 vorhanden, die auf der Leiterplatte 15 angeordnet ist. Die Lichtaustrittsfläche 19 des Lichtleiters 18 ist senkrecht zu der Ebene angeordnet, die die elektrischen Kontaktelemente enthält und die der Leiterplatte 15 zugewandt ist. In der erfindungsgemäßen Ausführungsform ist somit die Leuchtdiode 18 seitlich zu dem Lichtleiter 16 angeordnet, so dass eine geringe Einbautiefe realisiert ist.

Der Lichtleiter 16 ist in Figur 3 näher dargestellt. Es handelt sich dabei um einen geschlossenen kreisringförmigen Lichtleiter, der eine tangentiale, radial nach außen gerichtete Ausbuchtung 17 aufweist, die die Lichteinkoppelfläche enthält. Die Lichtauskopplung erfolgt über eine der Stirnseiten des ringförmigen Lichtleiters. In Figur 3 ist zusätzlich die Anordnung der Leuchtdiode 18 dargestellt. Aus dieser Darstellungsweise ist ersichtlich, dass die Einbautiefe durch die Anordnung der Leuchtdiode 18 an der Ausbuchtung 17 nicht größer ist als die Tiefe des Lichtleiters selbst. Dadurch, dass der Übergang des Lichtes von der Ausbuchtung 17 in den ringförmigen Teil des Lichtleiters unter einem flachen Winkel erfolgt, kann der Lichtverlust im Lichtleiter sehr klein gehalten werden. Zudem wird eine sehr homogene Ausleuchtung des ringförmigen Lichtleiters erzielt.

## Patentansprüche

1. Bediengerät eines Kraftfahrzeugs mit mehreren in einer sichtbaren Oberfläche des Bediengeräts angeordneten Bedienelementen, von denen zumindest eines von einer Lichtquelle über eine Lichtauskoppelfläche eines ringförmigen Lichtleiters beleuchtbar ist, **dadurch gekennzeichnet, dass** der Lichtleiter (16) eine geschlossene kreisringförmige Form mit einer tangentialen, radial nach außen gerichteten Ausbuchtung (17) aufweist, die eine Lichteinkoppelfläche senkrecht zur ringförmigen Lichtauskoppelfläche bildet.

2. Bediengerät nach Anspruch 1, **dadurch gekennzeichnet, dass** die Lichtauskoppelfläche des ringförmigen Lichtleiters (16) im wesentlichen formschlüssig in der sichtbaren Oberfläche des Bediengeräts angeordnet ist und das Bedienelement (2, 3) umschließt.

3. Bediengerät nach einem der vorhergehenden Ansprüche, **dadurch gekennzeichnet, dass** die Lichtquelle eine einzige Lichtauskoppelfläche (19) aufweist.

4. Bediengerät nach Anspruch 3, **dadurch gekennzeichnet, dass** es sich bei der Lichtquelle um eine Leuchtdiode (18) handelt.

5. Bediengerät nach einem der vorhergehenden Ansprüche, **dadurch gekennzeichnet, dass** die Lichtquelle auf einer Leiterplatte (15) befestigt ist und die Leiterplatte (15) in einer zur Kreisebene des kreisringförmigen Lichtleiters parallelen Ebene angeordnet ist.

6. Bediengerät nach einem der vorhergehenden Ansprüche 3 bis 5, **dadurch gekennzeichnet, dass** die einzige Lichtaustrittsfläche (19) der Lichtquelle senkrecht zu einer Fläche der Lichtquelle mit elektrischen Kontaktelementen angeordnet ist, die die Verbindung zur Leiterplatte (15) herstellen.

7. Bediengerät nach einem der vorhergehenden Ansprüche, **dadurch gekennzeichnet, dass** ein weiterer Lichtleiter (21) zur Beleuchtung mehrerer Bedienelemente (4- 7) vorhanden ist, der mehrere in der gleichen Ebene angeordnete Lichtauskoppelflächen (24) an fingerartigen Fortsetzungen (22) eines ansonsten flächigen Lichtleiters aufweist, wobei die Lichtauskoppelflächen (24) rechtwinklig zu einer gemeinsamen Lichteinkoppelfläche angeordnet sind.

## Claims

1. Control apparatus for a motor vehicle having a plurality of control elements which are arranged on a visible surface of the control apparatus and at least one of which can be illuminated by a light source via a light extraction surface of an annular light guide, **characterized in that** the light guide (16) has a continuous annular shape with a tangential bulge (17) which is directed radially outwards and forms a light input surface perpendicular to the annular light extraction surface.

2. Control apparatus according to Claim 1, **characterized in that** the light extraction surface of the annular light guide (16) is arranged essentially in a positively locking fashion on the visible surface of the control apparatus and surrounds the control element (2, 3).

3. Control apparatus according to one of the preceding claims, **characterized in that** the light source has a single light extraction surface (19).

4. Control apparatus according to Claim 3, **characterized in that** the light source is a light emitting diode (18).

5. Control apparatus according to one of the preceding claims, **characterized in that** the light source is attached to a printed circuit board (15), and the printed circuit board (15) is arranged in a plane which is parallel to the circular plane of the annular light guide.

6. Control apparatus according to one of the preceding Claims 3 to 5, **characterized in that** the single light extraction surface (19) of the light source is arranged perpendicular to a surface of the light source with electric contact elements which form the connection to the printed circuit board (15).

7. Control apparatus according to one of the preceding claims, **characterized in that** a further light guide (21) is provided for illuminating a plurality of control elements (4-7), which light guide (21) has a plurality of light extraction surfaces (24), arranged in the same plane, on finger-like projections (22) of an otherwise planar light guide, wherein the light extraction surfaces (24) are arranged at a right angle to a common light input surface.

## Revendications

1. Appareil de commande d'un véhicule automobile, comportant plusieurs éléments de commande disposés sur la surface extérieure visible de l'appareil de commande et parmi lesquels au moins l'un d'eux peut être éclairé par une source lumineuse en passant par une surface de découplage de la lumière d'un guide d'ondes lumineuses circulaire, **caractérisé par le fait que** le guide d'ondes lumineuses (16) a une forme circulaire fermée avec une échancrure (17) tangentielle orientée vers l'extérieur dans le sens radial, qui forme une surface de couplage de la lumière perpendiculaire à la surface circulaire de découplage de la lumière.

2. Appareil de commande selon la revendication 1, **caractérisé par le fait que** la surface de découplage de la lumière du guide circulaire (16) d'ondes optiques est disposée, pour l'essentiel, en assemblage géométrique dans la surface extérieure visible de l'appareil de commande et entoure l'élément de commande (2, 3).

3. Appareil de commande selon l'une des revendications précédentes, **caractérisé par le fait que** la source lumineuse ne comporte qu'une seule surface de découplage de la lumière (19).

4. Appareil de commande selon la revendication 3, **caractérisé par le fait que** la source lumineuse est une diode électroluminescente (18).

5. Appareil de commande selon l'une des revendications précédentes, **caractérisé par le fait que** la source lumineuse est fixée sur une carte à circuits imprimés (15) et que la carte à circuits imprimés (15) est placée dans un plan parallèle au plan dans lequel se trouve le guide circulaire d'ondes lumineuses.

6. Appareil de commande selon l'une des revendications précédentes 3 à 5, **caractérisé par le fait que** la seule surface de découplage de la lumière (19) de la source lumineuse est disposée perpendiculairement à une surface de la source lumineuse comportant des éléments de contact qui établissent la liaison avec la carte à circuits imprimés (15).

7. Appareil de commande selon l'une des revendications précédentes, **caractérisé par le fait qu'**il y a un deuxième guide d'ondes lumineuse (21) destiné à l'éclairage de plusieurs éléments de commande (4 - 7), lequel guide a plusieurs surfaces de découplage de lumière (24) disposées dans le même plan sur des prolongements (22) semblables à des doigts d'un guide d'ondes lumineuses, qui est par ailleurs plan, les surfaces de découplage de lumière (24) étant perpendiculaires à une surface commune de couplage de la lumière.
